# EUROPEAN PATENT SPECIFICATION

(11) **EP 3 448 698 B1**
(45) Date of publication and mention of the grant of the patent: **24.07.2024**
(21) Application number: 17790322.6
(22) Date of filing: 26.04.2017
(51) Int. Cl.: B60C 11/03, B60C 11/11, B60C 11/01, B60C 13/02, B60C 15/00

(54) **TIRE WITH UNIQUE TREAD BLOCK AND UPPER SIDEWALL DESIGN**
REIFEN MIT EINZIGARTIGEM LAUFFLÄCHENBLOCK- UND OBERSEITENWANDDESIGN
PNEUMATIQUE À CONCEPTION DE FLANC SUPÉRIEUR ET BLOC DE BANDE DE ROULEMENT UNIQUE

(30) Priority: 26.04.2016 US 201662327660 P
(43) Date of publication of application: 06.03.2019
(73) Proprietor: American Pacific Industries, Inc., Scottsdale, Arizona 85255 (US)
(72) Inventor: KREITZMAN, Jeff, Scottsdale, Arizona 85255 (US); GONG, Sunrong, Shanghai 201107 (CN); ZHAO, Haipeng, Weihai Shandong 264205 (CN)
(74) Representative: O'Connor, Michael Donal
(86) International application number: PCT/US2017/029578
(87) International publication number: WO 2017/189688

(56) References cited:
- WO-A2-03/020538
- US-A- 5 361 815
- US-A- 5 944 082
- US-A1- 2008 210 356
- US-A1- 2009 095 397
- US-A1- 2009 107 600
- US-A1- 2009 107 600
- US-A1- 2009 107 600
- US-A1- 2011 062 625
- US-B1- 6 213 180

## Description

### Related Cases

This application claims the benefit of U.S. Provisional Application No. 62/327,660 filed on 26 April 2016.

### Background

Tires may be used on multiple vehicle types (e.g., trucks, cars, trailers, etc.) to help travel under multiple on road/off road conditions. For instance, using trucks as an example, specific designs of tires may be used to help the truck travel under normal conditions, mud conditions, snow conditions, rain conditions, as well as other conditions. Tires comprising blocks on the upper sidewall to improve grip under off-road conditions are known from the documents US 2009/107600 A1 and US 2008/210356 A1.

### Brief Summary of Disclosure

The invention is set out in the appended set of claims.

One or more of the following example features may be included. The plurality of shoulder blocks may include an alternating pattern using the plurality of first block types and the plurality of second block types. The tire may further comprise a plurality of lateral grooves of a plurality of center ribs. A first portion of the plurality of lateral grooves may be staggered from a second portion of the plurality of lateral grooves. One or more of the plurality of lateral grooves of the plurality of center ribs may be connected to one or more lateral grooves on the shoulder. The one or more of the plurality of lateral grooves of the plurality of center ribs may be narrower than the one or more lateral grooves on the shoulder. The one or more of the plurality of lateral grooves of the plurality of center ribs may have an angle of 62 degrees, and the one or more lateral grooves on the shoulder may have an angle of 72 degrees. Only two rows of the plurality of shoulder blocks may contact a bottom surface at maximum tire load of the tire.

The details of one or more example implementations are set forth in the accompanying drawings and the description below. Other possible example features and/or possible example advantages will become apparent from the description, the drawings, and the claims. Some implementations may not have those possible example features and/or possible example advantages, and such possible example features and/or possible example advantages may not necessarily be required of some implementations.

### Brief Description of the Drawings

Fig. 1 is an example diagrammatic view of a tire according to one or more example implementations of the invention;
Fig. 2 is an example diagrammatic view of a tire according to one or more example implementations of the invention;
Fig. 3 is an example diagrammatic view of a tire according to one or more example implementations of the invention;
Fig. 4 is an example diagrammatic view of a tire footprint according to one or more example implementations of the invention;
Fig. 5 is an example diagrammatic view of a tire according to one or more example implementations of the invention;
Fig. 6 is an example formula table of a tire according to one or more example implementations of the invention; and
Fig. 7 is an example size and specification table of a tire according to one or more example implementations of the invention.

Like reference symbols in the various drawings indicate like elements.

### Detailed Description

### Overview:

Tires may be used on multiple vehicle types (e.g., trucks, cars, trailers, etc.) to help travel under multiple on road/off road conditions. For instance, using trucks as an example, specific designs of tires may be used to help the truck travel on paved or non-paved roads under normal conditions, mud conditions, snow conditions, rain conditions, as well as other conditions.

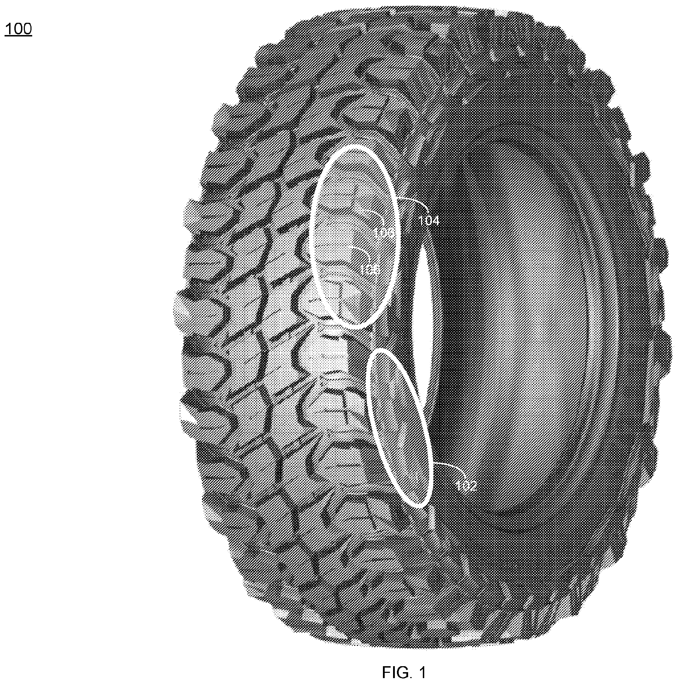

As discussed above and referring also at least to the example implementations of Figs. 1-7, a tire includes a sidewall, wherein the sidewall includes an upper sidewall. The upper sidewall includes a plurality of extruded, angled blocks proximate an outer edge of the tire. The tire includes a plurality of shoulder blocks. The plurality of shoulder blocks are at the outer edge of the tire on a shoulder.

Referring at least to the example implementation of Fig. 1, a tire (e.g., tire 100) is shown. The tire 100 includes a sidewall, which includes an upper sidewall (e.g., upper sidewall 102). The sidewall may generally be described as the side of a tire between the tread shoulder and the rim bead.

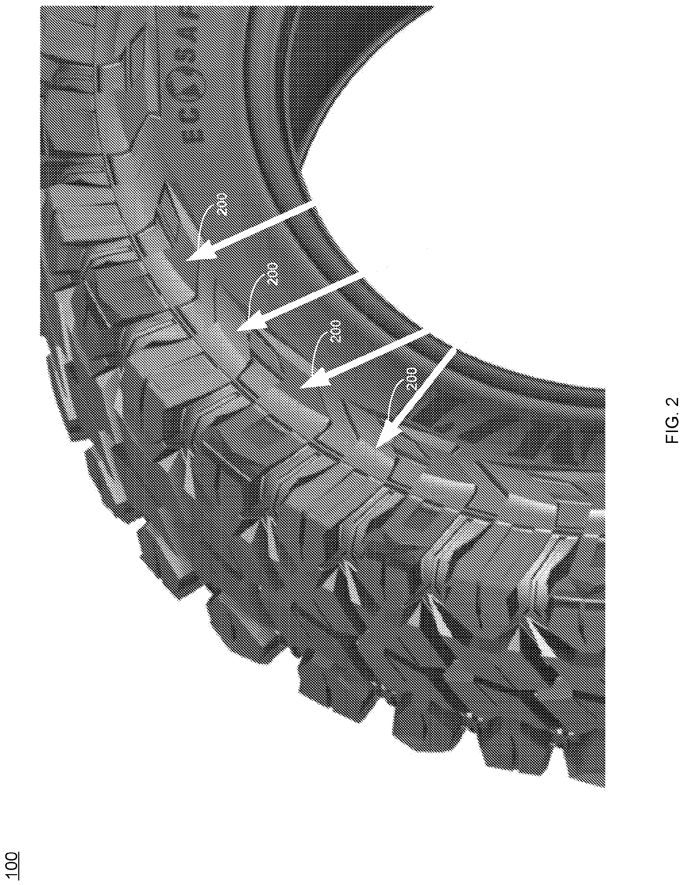

The upper sidewall includes a plurality of extruded, angled blocks proximate an outer edge of the tire. Referring at least to the example implementation of Fig. 2, upper sidewall 102 of tire 100 includes a plurality of extruded, angled (winged) blocks (e.g., blocks 200) proximate the outer edge of tire 100. Notably, the extruded, angled blocks are not to be confused with general "patterned" up (upper) sidewall design, which may not be extruded and/or angled blocks. The extruded, angled blocks may enhance the traction performance on deep snow, mud, or other soft surfaces, by e.g., promoting better traction for improved braking and handling.

Tire 100 includes a plurality of shoulder blocks. Referring again at least to the example implementation of Fig. 1, tire 100 includes a shoulder (e.g., shoulder 104). The plurality of shoulder blocks (e.g., shoulder blocks 106) are at the outer edge of tire 100 on shoulder 104.

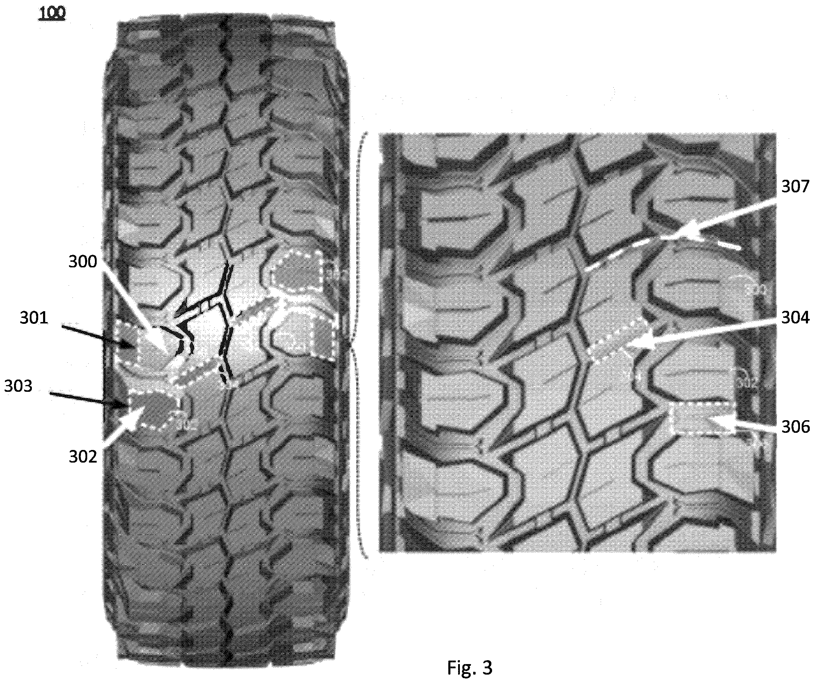

The plurality of shoulder blocks include a plurality of first block types. For example, and referring again at least to the example implementation of Fig. 3, tire 100 includes a plurality of shoulder blocks, where a first block type of the plurality of shoulder blocks is included. In the example, the plurality of first block types (e.g., first block type 300) include a tread surface 301 recessed from an edge of the tire. As shown in Fig. 3, first block type 300, the tread surface 301 of the first block type 300 is recessed from the tread surface edge and from the edge of the second block type (discussed below) of tire 100, as shown via the dashed lines of the recessed portion of first block type 300. In some implementations, first block type 300 may be recessed from the edge by, e.g., 5mm, and recessed from the tread surface by, e.g., 8mm. It will be appreciated that other recess amounts may be used without departing from the scope of the invention. In some implementations, the top surface of the recessed part of first block type 300 may have a particular shape (e.g., a triangular shape) if viewed from the side of tire 100.

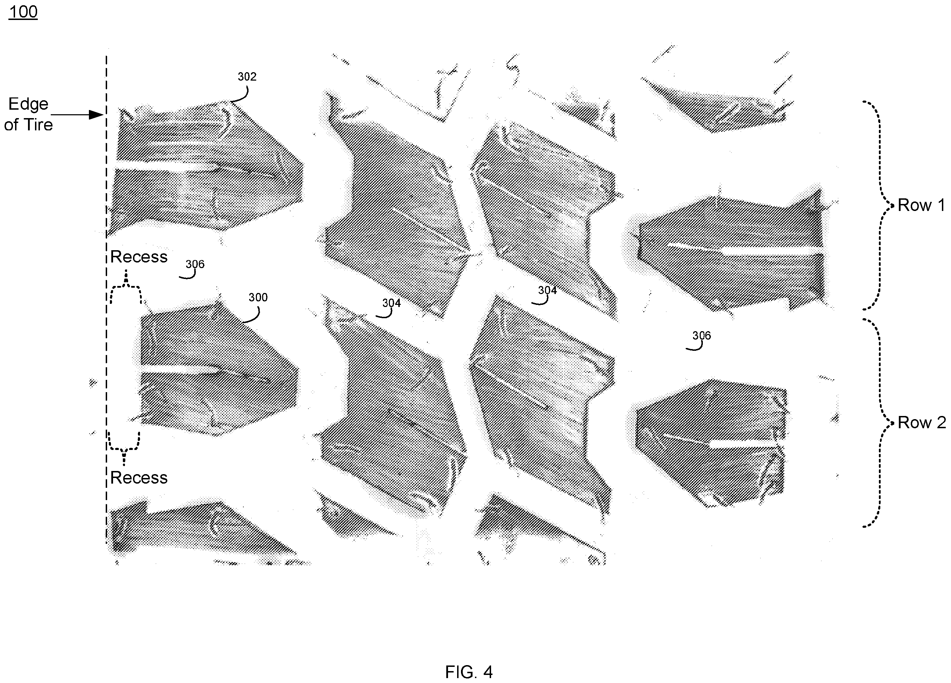

The plurality of shoulder blocks include a plurality of second block types. For example, and referring still to the example implementation of Fig. 3, tire 100 includes a plurality of shoulder blocks, where a second block type of the plurality of shoulder blocks is included. In the example, the plurality of second block types (e.g., second block type 302) include a tread surface 303 that extends outward. As shown via the dashed lines, the tread surface 303 of the second block type 302 extends outward to the edge of tire 100. Referring at least to the example implementation of Fig. 4, a footprint of tire 100 is shown to help show the differences between the tread surface of the first block type 300 recessed from the edge of tire 100, and the tread surface of the second block type 302 extends outward to the edge of tire 100. As noted above, first block type 300 may be recessed from the edge by, e.g., 5mm, and recessed from the tread surface by, e.g., 8mm.

In some implementations, the plurality of shoulder blocks may include an alternating pattern using the plurality of first block types (e.g., first block type 300) and the plurality of second block types (e.g., second block type 302). In some implementations, the alternating pattern may include, e.g., first block type 300, second block type 302, first block type 300, second block type 302, etc. It will be appreciated that other alternating patterns may also be used without departing from the scope of the invention. For example, the alternating pattern may include first block type 300, first block type 300, second block type 302, second block type 302, first block type 300, first block type 300, etc. As such, the example alternating pattern shown via Fig. 3 should be taken as example only and not to otherwise limiting the scope of the invention. In some implementations, the repeating pattern may provide tire 100 more "bite" or grip into the mud or other soft surface, thus creating more lateral and longitudinal force to improve handling.

In some implementations, the tire may further comprise a plurality of lateral grooves of a plurality of center ribs. For example, and referring still to the example implementation of Fig. 3, tire 100 may include a plurality of lateral grooves (e.g., lateral groove 304 shown via dashed lines) of the plurality of center ribs. In some implementations, the width of the lateral grooves may range from, e.g., 25 to 30mm, however, it will be appreciated that other size ranges may be used without departing from the scope of the invention. In some implementations, a first portion of the plurality of lateral grooves may be staggered from a second portion of the plurality of lateral grooves. For example, as shown via Fig. 3, each of the lateral grooves 304 is shown staggered (i.e., offset) from one another. Staggering the lateral grooves may provide resistance to air flow in the footprint, which may help with noise suppression. For example, one of the tire noise mechanism is a so-called air pumping effect. When the tire rotates and its surfaces comes into contact with the road surface, most of the air between the tire and the road surface may get pushed out, but the air in the tread grooves may become trapped and then compressed, creating the kind of 'whistling" noise. When the grooves are inline, it may be easier for the compressed air to travel, thus causing more noise. Staggered grooves may provide no direct path for noise travel, thus reducing noise.

In some implementations, one or more of the plurality of lateral grooves of the plurality of center ribs may be connected to one or more lateral grooves on the shoulder. For example, and referring still to the example implementation of Fig. 3, lateral groove 304 (of the center ribs) may be connected to another lateral groove (e.g., lateral groove 306 shown via white dashed lines 307) on the shoulder of tire 100.

In some implementations, the one or more of the plurality of lateral grooves of the plurality of center ribs may be narrower than the one or more lateral grooves on the shoulder. For example, and referring still to the example implementation of Fig. 3, lateral groove 304 (of the center ribs) may be narrower than lateral groove 306 (on the shoulder) of tire 100. The narrower lateral grooves 304 being connected with wider lateral grooves 306 may additionally / alternatively reduce the above-noted air pumping effect, as the wider shoulder grooves may provide "pressure" release for the trapped air. In some implementations, the ratio of narrower lateral groove 304 to wider lateral groove 306 may be, e.g., 1:2, however, it will be appreciated that other ratios may be used on lateral groove 304 and lateral groove 306 without departing from the scope of the invention.

In some implementations, the one or more of the plurality of lateral grooves of the plurality of center ribs (e.g., lateral groove 304) may have an angle of 62 degrees, and the one or more lateral grooves on the shoulder (e.g., lateral groove 306) may have an angle of 72 degrees. It will be appreciated that other angles may be used on lateral groove 304 and lateral groove 306 without departing from the scope of the invention. As such, the example angles of 62 and 72 degrees should be taken as example only and not to otherwise limit the scope of the invention.

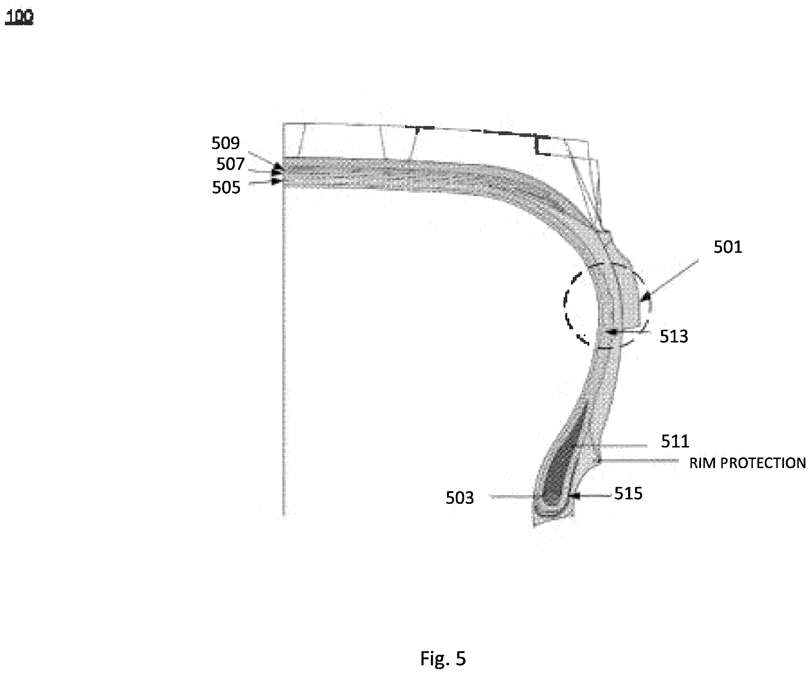

The sidewall includes a 3-ply with 2 ply high turn-up construction. For example, and referring to the example implementation of Fig. 5, tire 100 includes a lower sidewall, which includes a 3-ply with 2 ply high turn-up construction. This means that the tire carcass has a total of 3 plies, with 2 of the 3 plies being high turn-up. For example, when a body ply 501 is turned (wrapped around the bead 503) to the upper or middle sidewall area, it may be referred to as high turn-up construction. The 3-ply sidewall with the high turn-up construction may act as an extra layer on reinforcement to increase puncture resistance of the low sidewall area. In some implementations, three layers of polyester cord fabric 505 and two high strength layers of steel belts 507, and two layers of nylon 509 in the tread may guard against rock and debris puncture to the tread area. In some implementations, tire 100 may include a plurality of beads 503 in a bead filler 511, surrounded by five layers of polyester 513, and one chafer layer 515.

In some implementations, only two rows of the plurality of shoulder blocks may contact a bottom surface at maximum tire load of the tire. For example, and referring again to the example implementation of Fig. 4, assume that the maximum tire load of tire 100 is being applied (e.g., the maximum tire load specified in the T&RA manual and stamped on the tire sidewall, such as the example 35X12.5R20 (as illustrated in Figure 5) tire with the max load of 1450kg). In the example, only two rows (or substantially only two rows) of the plurality of shoulder blocks is making contact with the bottom surface. Thus, in the example, at the maximum tire load, at least two rows, but less than 3 full rows of the plurality of shoulder blocks is making contact with the bottom surface. Large tread blocks may provide stiff tread for enhanced off-road and all season performance. Large tread block may be quantified by a block's area and its relative size to tire-road contact area. Block surface area may vary with tire size, but using 35" outer diameter size as an sample, the surface area of a block may range from, e.g., 9500-14000 mm². For all sizes, at maximum tire load there are two rows of tread blocks that are in contact with the road, in comparison other tires of similar application having 3 - 4 rows of tread blocks in contact with the road.

In some implementations, tire 100 may have a ratio of rubber to void on the tread of, e.g., 5.4:4.6. This may allow for optimum balances for on-road and off-road (e.g., mud) performances. It will be appreciated that other ratios may be used without departing from the scope of the invention.

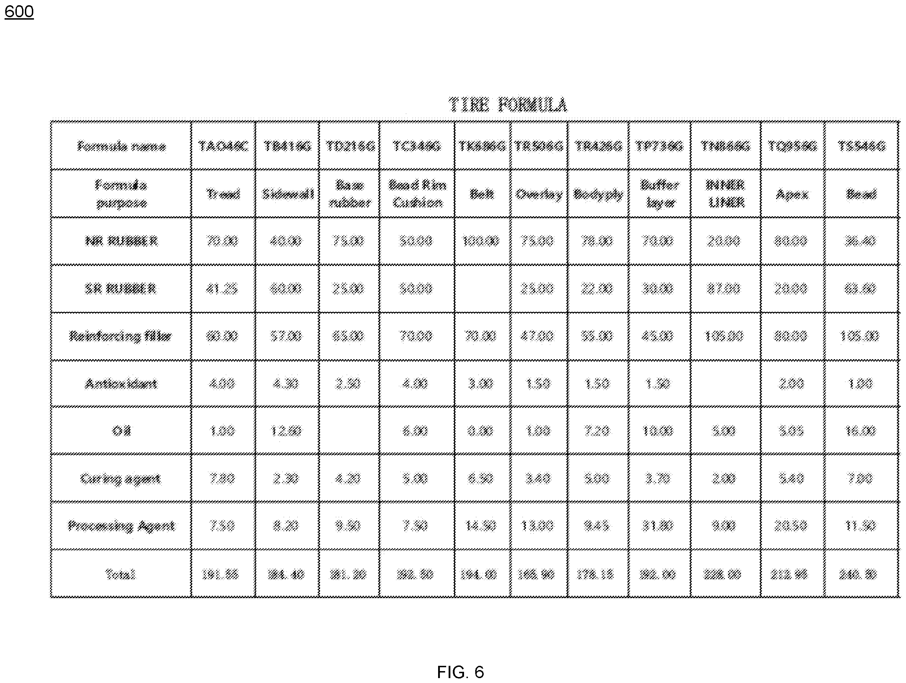

In some implementations, tire 100 may be formulated using a variety of different materials for one or more of its sections (e.g., tread, sidewall, base rubber, bead rim cushion, belt, overlay, bodyply, buffer layer, inner liner, apex, bead, etc.). Table 600 shown in Fig. 6 shows example materials and amounts of materials used for each of its section. It will be appreciated that various other materials and amounts may be used without departing from the scope of the invention. As such, the material in table 600 should be taken as example only and not to otherwise limit the scope of the invention.

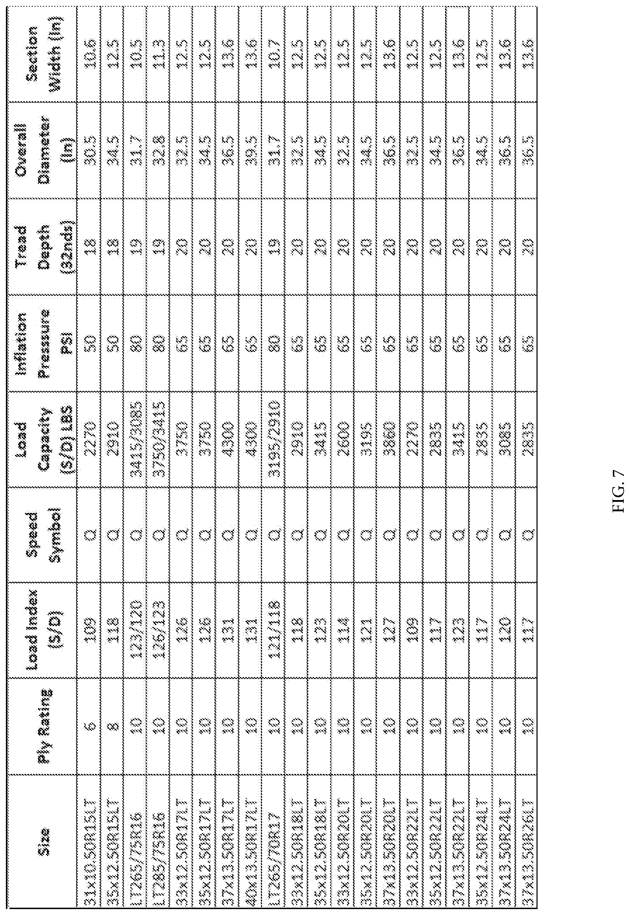

In some implementations, tire 100 may come in a variety of sizes with various specifications (e.g., tire size, load index, speed symbol, ply rating, outside diameter, section width, tread depth, load cap, etc.). Table 700 shown in Fig. 7 shows example specifications that may be used for different tire sizes. It will be appreciated that various other sizes with differing specifications may be used without departing from the scope of the invention. As such, the sizes and specifications in table 700 should be taken as example only and not to otherwise limit the scope of the invention.

### General:

The terminology used herein is for the purpose of describing particular implementations only and is not intended to be limiting of the invention. As used herein, the singular forms "a", "an" and "the" are intended to include the plural forms as well, unless the context clearly indicates otherwise. As used herein, the language "at least one of A, B, and C" (and the like) should be interpreted as covering only A, only B, only C, or any combination of the three, unless the context clearly indicates otherwise. It will be further understood that the terms "comprises" and/or "comprising," when used in this specification, specify the presence of stated features, integers, elements, and/or components, but do not preclude the presence or addition of one or more other features, integers, elements, components, and/or groups thereof.

The description of the present invention has been presented for purposes of illustration and description, but is not intended to be exhaustive or limited to the invention in the form disclosed. Many modifications, variations, substitutions, and any combinations thereof will be apparent to those of ordinary skill in the art without departing from the scope of the claims. The implementation(s) were chosen and described in order to explain the principles of the invention and the practical application, and to enable others of ordinary skill in the art to understand the invention for various implementation(s) with various modifications and/or any combinations of implementation(s) as are suited to the particular use contemplated.

Having thus described the invention of the present application in detail and by reference to implementation(s) thereof, it will be apparent that modifications, variations, and any combinations of implementation(s) (including any modifications, variations, substitutions, and combinations thereof) are possible without departing from the scope of the invention defined in the appended claims.

## Claims

1. A tire (100) comprising:
a sidewall including an upper sidewall (102), wherein the upper sidewall includes a plurality of angled winged blocks (200) proximate an outer edge of the tire; and
a plurality of shoulder blocks (106), wherein the plurality of shoulder blocks are at the outer edge of the tire on a shoulder (104), wherein the plurality of shoulder blocks includes a plurality of first block types (300), wherein the plurality of first block types includes a tread surface recessed from an edge of the tire, wherein the plurality of shoulder blocks includes a plurality of second block types (302), and wherein the plurality of second block types includes a tread surface that extends outward to the edge of the tire;
**characterized in that** the plurality of angled winged blocks are extruded, angled winged blocks; and
the sidewall includes a 3-ply with 2 ply high turn-up construction.

2. The tire (100) of claim 1 wherein the plurality of shoulder blocks (106) includes an alternating pattern using the plurality of first block types (300) and the plurality of second block types (302).

3. The tire (100) of claim 1 further comprising a plurality of lateral grooves (304) of a plurality of center ribs.

4. The tire (100) of claim 3 wherein a first portion of the plurality of lateral grooves (304) are staggered from a second portion of the plurality of lateral grooves (304).

5. The tire (100) of claim 4 wherein one or more of the plurality of lateral grooves (304) of the plurality of center ribs are connected to one or more lateral grooves (306) on the shoulder.

6. The tire (100) of claim 5 wherein the one or more of the plurality of lateral grooves (304) of the plurality of center ribs arc narrower than the one or more lateral grooves (306) on the shoulder.

7. The tire (100) of claim 6 wherein the one or more of the plurality of lateral grooves (304) of the plurality of center ribs have an angle of 62 degrees, and wherein the one or more lateral grooves (306) on the shoulder have an angle of 72 degrees.

8. The tire (100) of claim 1 wherein only two rows of the plurality of shoulder blocks (106) contact a bottom surface at maximum tire load of the tire.

9. The tire (100) of claim 2 further comprising a plurality of lateral grooves (304) of a plurality of center ribs.

10. The tire (100) of claim 9 wherein a first portion of the plurality of lateral grooves (304) are staggered from a second portion of the plurality of lateral grooves (304).

11. The tire (100) of claim 9 wherein one or more of the plurality of lateral grooves (304) of the plurality of center ribs arc connected to one or more lateral grooves (306) on the shoulder.

12. The tire (100) of claim 1 1 wherein the one or more of the plurality of lateral grooves (304) of the plurality of center ribs are narrower than the one or more lateral grooves (306) on the shoulder.

## Patentansprüche

1. Reifen (100), der Folgendes umfasst:
eine Seitenwand, die eine obere Seitenwand (102) einschließt, wobei die obere Seitenwand eine Vielzahl abgewinkelter Flügelblöcke (200) nahe bei einer Außenkante des Reifens einschließt; und
eine Vielzahl von Schulterblöcken (106), wobei sich die Vielzahl von Schulterblöcken an der Außenkante des Reifens auf einer Schulter (104) befindet, wobei die Vielzahl von Schulterblöcken eine Vielzahl erster Blocktypen (300) einschließt, wobei die Vielzahl erster Blocktypen eine von einer Kante des Reifens aus vertiefte Lauffläche einschließt, wobei die Vielzahl von Schulterblöcken eine Vielzahl zweiter Blocktypen (302) einschließt und wobei die Vielzahl zweiter Blocktypen eine Lauffläche, die nach außen zu der Kante des Reifens hin verläuft, einschließt;
**dadurch gekennzeichnet, dass** es sich bei der Vielzahl abgewinkelter Flügelblöcke um extrudierte, abgewinkelte Flügelblöcke handelt; und
die Seitenwand eine Konstruktion mit 3 Lagen und einem hohen 2-Lagenumschlag einschließt.

2. Reifen (100) nach Anspruch 1, wobei die Vielzahl von Schulterblöcken (106) ein alternierendes Muster, das die Vielzahl erster Blocktypen (300) und die Vielzahl zweiter Blocktypen (302) nutzt, einschließt.

3. Reifen (100) nach Anspruch 1, der ferner eine Vielzahl von Querrillen (304) einer Vielzahl von Mittelrippen umfasst.

4. Reifen (100) nach Anspruch 3, wobei ein erster Abschnitt der Vielzahl von Querrillen (304) zu einem zweiten Abschnitt der Vielzahl von Querrillen (304) versetzt ist.

5. Reifen (100) nach Anspruch 4, wobei eine oder mehrere der Vielzahl von Querrillen (304) der Vielzahl von Mittelrippen mit einer oder mehreren Querrillen (306) auf der Schulter verbunden ist/sind.

6. Reifen (100) nach Anspruch 5, wobei die eine oder die mehreren der Vielzahl von Querrillen (304) der Vielzahl von Mittelrippen schmaler als die eine oder die mehreren Querrillen (306) auf der Schulter ist/sind.

7. Reifen (100) nach Anspruch 6, wobei die eine oder die mehreren der Vielzahl von Querrillen (304) der Vielzahl von Mittelrippen einen Winkel von 62 Grad aufweist/aufweisen und wobei die eine oder die mehreren Querrillen (306) auf der Schulter einen Winkel von 72 Grad aufweist/aufweisen.

8. Reifen (100) nach Anspruch 1, wobei nur zwei Reihen der Vielzahl von Schulterblöcken (106) eine untere Oberfläche bei einer maximalen Reifenbelastung des Reifens berühren.

9. Reifen (100) nach Anspruch 2, der ferner eine Vielzahl von Querrillen (304) einer Vielzahl von Mittelrippen umfasst.

10. Reifen (100) nach Anspruch 9, wobei ein erster Abschnitt der Vielzahl von Querrillen (304) zu einem zweiten Abschnitt der Vielzahl von Querrillen (304) versetzt ist.

11. Reifen (100) nach Anspruch 9, wobei eine oder mehrere der Vielzahl von Querrillen (304) der Vielzahl von Mittelrippen mit einer oder mehreren Querrillen (306) auf der Schulter verbunden ist/sind.

12. Reifen (100) nach Anspruch 11, wobei die eine oder die mehreren der Vielzahl von Querrillen (304) der Vielzahl von Mittelrippen schmaler als die eine oder die mehreren Querrillen (306) auf der Schulter ist/sind.

## Revendications

1. Pneu (100) comportant :
un flanc comprenant un flanc supérieur (102), dans lequel le flanc supérieur comprend une pluralité de pavés à ailettes angulaires (200) à proximité d'un bord extérieur du pneu ; et
une pluralité de pavés d'épaulement (106), dans lequel les pavés d'épaulement de la pluralité de pavés d'épaulement sont au niveau du bord extérieur du pneu sur un épaulement (104), dans lequel la pluralité de pavés d'épaulement comprend une pluralité de premiers types de pavés (300), dans lequel la pluralité de premiers types de pavés comprend une surface de bande de roulement en retrait par rapport à un bord du pneu, dans lequel la pluralité de pavés d'épaulement comprend une pluralité de deuxièmes types de pavés (302), et dans lequel la pluralité de deuxièmes types de pavés comprend une surface de bande de roulement qui s'étend vers l'extérieur jusqu'au bord du pneu ;
**caractérisé en ce que** les pavés à ailettes angulaires de la pluralité de pavés à ailettes angulaires sont des pavés à ailettes angulaires extrudés ; et
le flanc comprend une construction à 3 nappes avec un retournement à 2 nappes de haut.

2. Pneu (100) selon la revendication 1, dans lequel la pluralité de pavés d'épaulement (106) comprend une sculpture alternée qui utilise la pluralité de premiers types de pavés (300) et la pluralité de deuxièmes types de pavés (302).

3. Pneu (100) selon la revendication 1, comportant par ailleurs une pluralité de rainures latérales (304) d'une pluralité de nervures centrales.

4. Pneu (100) selon la revendication 3, dans lequel une première partie de la pluralité de rainures latérales (304) est décalée par rapport à une deuxième partie de la pluralité de rainures latérales (304).

5. Pneu (100) selon la revendication 4, dans lequel une ou plusieurs rainures latérales de la pluralité de rainures latérales (304) de la pluralité de nervures centrales sont reliées à une ou plusieurs rainures latérales (306) sur l'épaulement.

6. Pneu (100) selon la revendication 5, dans lequel lesdites une ou plusieurs rainures latérales de la pluralité de rainures latérales (304) de la pluralité de nervures centrales sont plus étroites que lesdites une ou plusieurs rainures latérales (306) sur l'épaulement.

7. Pneu (100) selon la revendication 6, dans lequel lesdites une ou plusieurs rainures latérales de la pluralité de rainures latérales (304) de la pluralité de nervures centrales ont un angle de 62 degrés, et dans lequel lesdites une ou plusieurs rainures latérales (306) sur l'épaulement ont un angle de 72 degrés.

8. Pneu (100) selon la revendication 1, dans lequel seules deux rangées de la pluralité de pavés d'épaulement (106) entrent en contact avec une surface inférieure à une charge de pneu maximale du pneu.

9. Pneu (100) selon la revendication 2, comportant par ailleurs une pluralité de rainures latérales (304) d'une pluralité de nervures centrales.

10. Pneu (100) selon la revendication 9, dans lequel une première partie de la pluralité de rainures latérales (304) est décalée par rapport à une deuxième partie de la pluralité de rainures latérales (304).

11. Pneu (100) selon la revendication 9, dans lequel une ou plusieurs rainures latérales de la pluralité de rainures latérales (304) de la pluralité de nervures centrales sont reliées à une ou plusieurs rainures latérales (306) sur l'épaulement.

12. Pneu (100) selon la revendication 11, dans lequel lesdites une ou plusieurs rainures latérales de la pluralité de rainures latérales (304) de la pluralité de nervures centrales sont plus étroites que lesdites une ou plusieurs rainures latérales (306) sur l'épaulement.
